# FASCICULE DE BREVET EUROPEEN

(11) **EP 1 544 478 B1**
(45) Date de publication et mention de la délivrance du brevet: **07.02.2007**
(21) Numéro de dépôt: 04360106.1
(22) Date de dépôt: 17.12.2004
(51) Int. Cl.: F16B 7/04

(54) **Collier d'assemblage**
Zusammengesetzte Rohrschelle
Assembly of a pipe clamp

(30) Priorité: 18.12.2003 FR 0314894
(43) Date de publication de la demande: 22.06.2005
(73) Titulaire: Husson International (Société Anonyme), 68650 Lapoutroie (FR)
(72) Inventeur: Husson, Daniel, 68240 Kaysersberg (FR)
(74) Mandataire: Nuss, Pierre

(56) Documents cités:
- FR-A- 2 779 782
- US-A- 4 864 795
- US-A- 5 785 447
- US-A1- 2002 094 228

## Description

La présente invention concerne le domaine des assemblages de structures tubulaires, en particulier des constructions tubulaires, telles que des mobiliers urbains, des équipements de sport et de loisirs, ainsi que des échafaudages et des matériels d'exposition, et a pour objet un collier d'assemblage pour de telles structures (FR 2 779 782).

Actuellement, l'assemblage d'éléments tubulaires de ce type, au niveau des noeuds, est généralement effectué au moyen de colliers en deux parties, enserrant les tubes au niveau du noeud par pincement au moyen de boulons traversant lesdits colliers.

Il peut également être prévu un montage direct entre deux tubes au niveau d'un noeud, au moyen d'un boulon ou encore d'éléments d'assemblage à accrochage avec verrouillage de l'assemblage au moyen de vis de pression. Par ailleurs, on connaît, dans le domaine des matériels d'exposition, notamment des étagères, des dispositifs d'assemblage sous forme de boules présentant un certain nombre de trous borgnes pouvant coopérer chacun avec un tube ou analogue, lesdites boules étant simplement emboîtées sur l'extrémité des tubes.

Ces différents dispositifs d'assemblage de noeuds connus présentent, cependant, un certain nombre d'inconvénients, à savoir, dans le cas de colliers, de ne permettre que la réalisation de noeuds présentant un nombre réduit de tubes et, dans le cas d'utilisation de boules ou analogues, de ne pas permettre un blocage des extrémités de tubes dans lesdites boules. En outre, la prévision de colliers ne permet pas une obtention d'une esthétique compatible, par exemple, avec la réalisation de certaines structures, en particulier dans le domaine des loisirs ou de l'équipement de magasins.

Il est également connu, par FR-A-2 694 583, un noeud d'assemblage pour structures tubulaires qui se présente sous forme de deux demi-coquilles assemblées entre elles par boulonnage et munies d'évidements correspondants et/ou de perçages pour l'insertion et le blocage d'extrémités d'éléments tubulaires. Ce noeud d'assemblage permet de réaliser un assemblage, d'une part, des extrémités de plusieurs éléments tubulaires au moyen des demi-coquilles, les moyens de serrage des coquilles entre-elles servant simultanément au blocage desdites extrémités au niveau des évidements correspondants et, d'autre part, le montage de l'extrémité d'autres éléments tubulaires perpendiculairement au plan des premiers avec maintien en position par des moyens d'assujettissement spécifiques. EP-A-0 965 766 décrit, en outre, une solution de maintien sans jeu d'éléments tubulaires montés dans de tels noeuds.

Cependant, ces noeuds d'assemblage connus sont souvent inadaptés à un montage d'un plus petit nombre d'éléments tubulaires, à savoir uniquement de deux ou de trois éléments. Ce problème ne trouve actuellement aucune solution économique, chaque problème de montage devant être résolu par une solution particulière faisant à chaque fois appel à des pièces d'assemblage spécifiques et donc à des colliers spécifiques à chaque configuration de structure, de sorte que le nombre de pièces détachées nécessaires à des séries d'assemblages divers est relativement élevé et que le coût de revient individuel de ces colliers en est obéré.

La présente invention a pour but de pallier ces inconvénients, en proposant un collier d'assemblage, pour structures tubulaires, en particulier des constructions tubulaires, telles que des mobiliers urbains, des équipements de sport et de loisirs, ainsi que des échafaudages et des matériels d'exposition, permettant une adaptation à un grand nombre de variantes d'assemblage avec mise en oeuvre d'un minimum de pièces individuelles de base.

A cet effet, le collier d'assemblage comprend les caractéristiques de la revendication 1.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue éclatée en perspective d'un collier conforme à l'invention ;
la figure 2 est une vue en perspective d'une variante de réalisation de la pièce de base du collier, et
la figure 3 est une vue en perspective représentant le montage de différentes formes de structure sur un poteau par mise en oeuvre du collier conforme à l'invention en différentes variantes de réalisation.

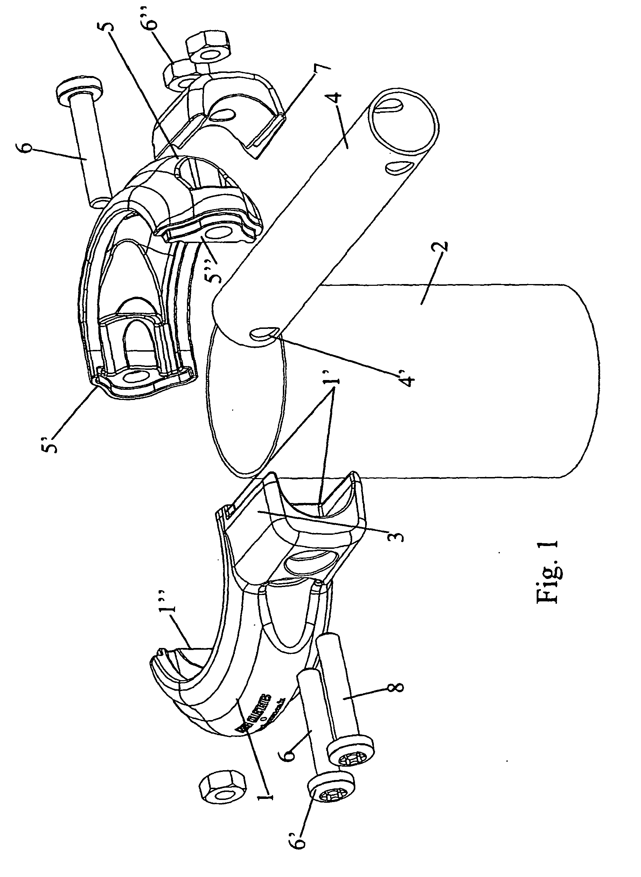

La figure 1 des dessins annexés représente un collier d'assemblage, qui est essentiellement constitué par une pièce de base 1, formant un demi-collier de fixation sur un poteau de support 2 ou analogue et munie d'au moins un logement ouvert 3 de réception de l'extrémité d'un élément tubulaire 4 s'étendant dans un plan perpendiculaire à l'axe du poteau de support 2, par une pièce 5 complémentaire de la pièce de base 1, formant également un demi-collier de fixation sur un poteau de support 2 ou analogue et coopérant avec ladite pièce de base 1 pour leur serrage sur le poteau de support 2 par l'intermédiaire de boulons de serrage correspondants 6 et par au moins une partie 7 de fermeture du logement ouvert 3 de réception de l'extrémité d'un élément tubulaire 4 et de serrage de ladite extrémité dans ledit logement 3.

Selon une caractéristique de l'invention, la pièce de base 1 et la pièce complémentaire 5 présentent des plans de joint symétriques à coopération de forme consistant en des jupes périphériques 1', 5' et des bossages 1", 5" et les bords parallèles délimitant le logement ouvert 3 de la pièce de base 1 sont sous forme de nervures coopérant avec des rainures correspondantes parallèles des bords de la partie 7 de la fermeture dudit logement ouvert 3. Ainsi, le montage du collier d'assemblage conforme à l'invention peut être réalisé très rapidement, les pièces 1 et 4 de ce collier se positionnant l'une en face de l'autre par enclenchement de leurs jupes périphériques de bossage des plans de joint. Il en est de même en ce qui concerne la mise en place de la partie 7 par rapport au logement ouvert 3.

Conformément à une autre caractéristique de l'invention, les pièces de base 1 et complémentaires 5 sont assemblées entre elles par l'intermédiaire de boulons 6 les traversant au niveau de leurs plans de joint, la tête 6' et l'écrou 6" de chaque boulon étant avantageusement logés dans des évidements de forme correspondante desdites pièces 1 et 5.

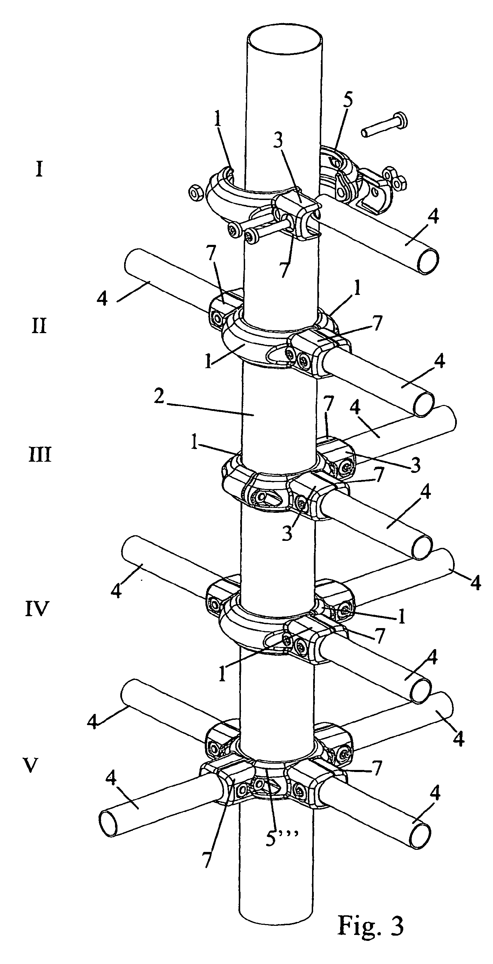

Par ailleurs, la partie 7 de fermeture du logement ouvert 3 de réception de l'extrémité d'un élément tubulaire 4 et de serrage de ladite extrémité dans ledit logement 3 est avantageusement fixée sur la pièce de base 1 par l'intermédiaire d'un boulon 8 traversant ladite partie 7 et la pièce de base 1, au niveau du logement 3, ainsi qu'un perçage correspondant 4' de l'élément tubulaire 4, la tête de vis et l'écrou de ce boulon 8 coopérant avec des évidements de forme correspondante prévus respectivement dans le corps du logement 3 de la pièce de base 1 et dans la partie 7 de fermeture. Ce mode de réalisation permet d'assurer simultanément le serrage et le positionnement de l'élément tubulaire 4 dans le logement 3. Un tel montage d'un élément tubulaire 4 unique sur un poteau de support 2 au moyen d'une pièce de base 1, d'une pièce complémentaire 5 et d'une partie de fermeture 7 correspond à la représentation I de la figure 3.

De manière connue, les boulons 6 et 8 sont avantageusement constitués par une vis à tête cylindrique pourvue d'un moyen d'actionnement en creux et par un écrou polygonal. Ainsi, la tête de vis et l'écrou de chaque boulon 6 et 8 peuvent être entièrement noyés dans la matière des demi-colliers au niveau des plans de joint.

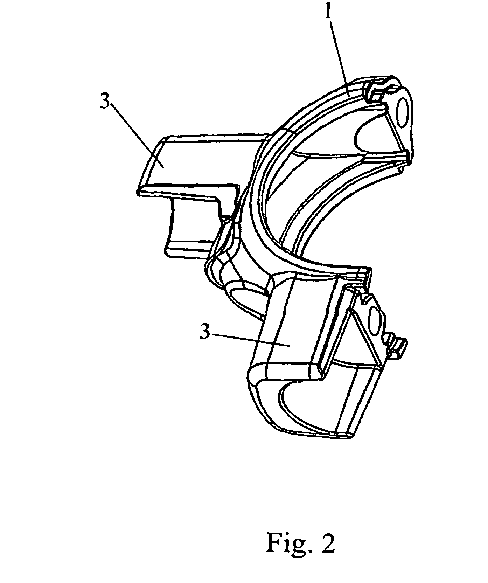

Conformément à une variante de réalisation de l'invention, et comme le montre la figure 2 des dessins annexés, la pièce de base 1 peut être munie de deux logements ouverts 3 de réception de l'extrémité d'élément tubulaire 4 s'étendant dans un plan perpendiculaire à l'axe du poteau de support 2, l'un au moins de ces logements ouverts 3 s'étendant suivant un angle par rapport aux plans de joint de ladite pièce de base 1, chaque logement ouvert 3 étant muni d'une partie de fermeture 7 (figure 3). Ainsi, comme il ressort de la figure 2 et de la variante de montage III représentée à la figure 3, il est possible de réaliser avec une seule pièce de base 3 et avec une pièce complémentaire 5 un montage simultané de deux éléments tubulaires 6 sur un poteau 2, lesdits éléments tubulaires 6 s'étendant suivant des plans verticaux différents.

Selon une autre variante de réalisation de l'invention et comme il apparaît plus particulièrement sur la représentation II de la figure 3 des dessins annexés, il est également possible de prévoir une pièce complémentaire 5' identique à la pièce de base 1. Dans un tel cas, le montage du collier ainsi réalisé sur un poteau 2 permet, par mise en oeuvre du logement ouvert 3 prévu dans chaque pièce 1 et 5' et des parties de fermeture correspondantes 7, de fixer deux éléments tubulaires 6 en alignement.

Conformément à une autre variante de réalisation de l'invention et comme le montre aussi la figure 3 des dessins annexés, par les représentations IV et V, il est également possible de réaliser une pièce complémentaire 5"' pourvue de deux logements ouverts 3 de réception de l'extrémité d'élément tubulaire 4 s'étendant dans un plan perpendiculaire à l'axe du poteau de support 2, l'un au moins de ces logements ouverts 3 s'étendant suivant un angle par rapport aux plans de joint de ladite pièce de base 1, chaque logement ouvert 3 étant muni d'une partie de fermeture 7. Une telle pièce complémentaire 5"' peut donc être identique à la pièce de base 1 munie de deux logements ouverts 3, décrite plus haut et permet de réaliser, en coopération avec une telle pièce de base 1 à deux logements ouverts 3, un collier d'assemblage pour le montage de quatre éléments tubulaires 4 (représentation V), alors que sa coopération avec une pièce de base 1 à un seul logement ouvert 3 permet l'obtention d'un noeud à trois éléments tubulaires 4 (représentation IV).

Grâce à l'invention, il est possible de réaliser un collier d'assemblage, en particulier pour mobilier urbain, équipements de sport et de loisirs etc..., permettant, avec mise en oeuvre d'un nombre limité de pièces un montage esthétique d'un grand nombre de variantes de structures tubulaires sur des poteaux de support. Du fait que beaucoup de variantes d'assemblage sont possibles avec un très petit nombre de pièces, le coût de ces dernières peut être réduit et les frais de stockage et d'approvisionnement peuvent également réduits.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Collier d'assemblage qui est essentiellement constitué par une pièce de base (1), formant un demi-collier de fixation sur un poteau de support (2) ou analogue et munie d'au moins un logement ouvert (3), de réception de l'extrémité d'un élément tubulaire (4) s'étendant dans un plan perpendiculaire à l'axe du poteau de support (2) et solidaire de la pièce de base (1), par une pièce (5) complémentaire de la pièce de base(1), formant également un demi-collier de fixation sur un poteau de support (2) ou analogue et coopérant avec ladite pièce de base (1) pour leur serrage sur le poteau de support (2) par l'intermédiaire de boulons de serrage correspondants (6) **caractérisé en ce qu'**il comprend au moins une partie indépendante (7) de fermeture du logement ouvert (3) de réception de l'extrémité d'un élément tubulaire (4) et de serrage de ladite extrémité dans ledit logement(3), fixée sur ladite pièce de base (1).

2. Collier, suivant la revendication 1, **caractérisé en ce que** la pièce de base (1) et la pièce complémentaire (5) présentent des plans de joint symétriques à coopération de forme consistant en des jupes périphériques (1', 5') et des bossages (1", 5") et les bords parallèles délimitant le logement ouvert (3) de la pièce de base (1) sont sous forme de nervures coopérant avec des rainures correspondantes parallèles des bords de la partie (7) de la fermeture dudit logement ouvert (3).

3. Collier, suivant l'une quelconque des revendications 1 et 2, **caractérisé en ce que** les pièces de base (1) et complémentaires (5) sont assemblées entre elles par l'intermédiaire de boulons (6) les traversant au niveau de leurs plans de joint, la tête (6') et l'écrou (6") de chaque boulon étant logés dans des évidements de forme correspondante desdites pièces (1 et 5).

4. Collier, suivant l'une quelconque des revendications 1 et 2, **caractérisé en ce que** la partie (7) de fermeture du logement ouvert (3) de réception de l'extrémité d'un élément tubulaire (4) et de serrage de ladite extrémité dans ledit logement (3) est fixée sur la pièce de base (1) par l'intermédiaire d'un boulon (8) traversant ladite partie (7) et la pièce de base (1), au niveau du logement (3), ainsi qu'un perçage correspondant (4') de l'élément tubulaire (4), la tête de vis et l'écrou de ce boulon (8) coopérant avec des évidements de forme correspondante prévus respectivement dans le corps du logement (3) de la pièce de base (1) et dans la partie (7) de fermeture.

5. Collier, suivant la revendication 1, **caractérisé en ce que** la pièce de base (1) est munie de deux logements ouverts (3) de réception de l'extrémité d'élément tubulaire (4) s'étendant dans un plan perpendiculaire à l'axe du poteau de support (2), l'un au moins de ces logements ouverts (3) s'étendant suivant un angle par rapport aux plans de joint de ladite pièce de base (1), chaque logement ouvert (3) étant muni d'une partie de fermeture (7).

6. Collier, suivant la revendication 1, **caractérisé en ce qu'**il comporte une pièce complémentaire (5') identique à la pièce de base (1).

7. Collier, suivant la revendication 1, **caractérisé en ce qu'**il comporte une pièce complémentaire (5"') pourvue de deux logements ouverts (3) de réception de l'extrémité d'éléments tubulaires (4) s'étendant dans un plan perpendiculaire à l'axe du poteau de support (2), l'un au moins de ces logements ouverts (3) s'étendant suivant un angle par rapport aux plans de joint de ladite pièce de base (1), chaque logement ouvert (3) étant muni d'une partie de fermeture (7).

## Claims

1. Assembly collar, basically consisting of a base part (1), forming a half-collar for attachment to a support post (2) or the like and provided with at least one open recess (3) for receiving the end of a tubular element (4) extending in a plane perpendicular to the axis of the support post (2) and integral with the base part (1), of a part (5) complementary to the base part (1), also forming a half-collar for attachment to a support post (2) or the like and cooperating with said base part (1) for the collaring thereof to the support post (2) by means of corresponding collaring bolts (6), **characterised in that** it comprises at least one independent portion (7) for closing the open recess (3) for receiving the end of a tubular element (4) and for collaring said end in said recess (3), attached to said base part (1).

2. Collar according to claim 1, **characterised in that** the base part (1) and the complementary part (5) have mating symmetrical joint planes, consisting of peripheral skirts (1', 5') and bosses (1", 5") and the parallel edges delimiting the open recess (3) of the base part (1) are in the form of ribs which cooperate with the corresponding parallel grooves in the edges of the portion (7) for closing said open recess (3).

3. Collar according to any one of claims 1 and 2, **characterised in that** the base and complementary parts (1 and 5) are joined together by means of bolts (6) passing through them at their joint planes, the head (6') and nut (6") of each bolt being received in correspondingly shaped apertures in said parts (1 and 5).

4. Collar according to any one of claims 1 and 2, **characterised in that** the portion (7) for closing the open recess (3) for receiving the end of a tubular element (4) and for collaring said end in said recess (3) is attached to the base part (1) by means of a bolt (8) passing through said portion (7) and the base part (1) in the region of the recess (3), as well as a corresponding perforation (4') in the tubular element (4), the screw head and the nut of this bolt (8) cooperating with correspondingly shaped apertures provided in the body of the recess (3) of the base part (1) and in the closure portion (7) respectively.

5. Collar according to claim 1, **characterised in that** the base part (1) is provided with two open recesses (3) for receiving the end of a tubular element (4) extending in a plane perpendicular to the axis of the support post (2), at least one of these open recesses (3) extending at an angle relative to the joint planes of said base part (1), each open recess (3) being provided with a closure part (7).

6. Collar according to claim 1, **characterised in that** it comprises a complementary part (5') identical to the base part (1).

7. Collar according to claim 1, **characterised in that** it comprises a complementary part (5''')provided with two open recesses (3) for receiving the end of tubular elements (4) extending in a plane perpendicular to the axis of the support post (2), at least one of these open recesses (3) extending at an angle relative to the joint planes of said base part (1), each open recess (3) being provided with a closure part (7).

## Patentansprüche

1. Montageschelle, die im Wesentlichen aus einem Basisteil (1), das eine Halbschelle zum Befestigen an einem Haltepfosten (2) oder Ähnlichem bildet und mit wenigstens einer offenen Aufnahme (3) für die Aufnahme eines Rohrelements (4) versehen ist, diesich in einer zur Achse des Haltepfostens (2) senkrechten Ebene erstreckt und die mit dem Basisteil (1) fest verbunden ist, und einem Komplementärteil (5) zum Basisteil (1), das ebenfalls eine Halbschelle zum Befestigen an einem Haltepfosten (2) oder Ähnlichem bildet und das mit dem Basisteil (1) kooperiert, um zusammen mit Basisteil (1) an einem Haltepfosten (2) mittels entsprechender Schraubbolzen (6) festgeklemmt zu werden, besteht, **dadurch gekennzeichnet, dass** sie wenigstens ein unabhängiges Schließelement (7) zum Schließen der offenen Aufnahme (3) für die Aufnahme des Endstückes eines Rohrelements (4) und zum Festklemmen des Endstückes in der offenen Aufnahme (3), die an dem Basisteil (1) angebracht ist, aufweist.

2. Schelle nach Anspruch 1, **dadurch gekennzeichnet, dass** das Basisteil (1) und das Komplementärteil (5) zusammenwirkende symmetrische Stossflächen mit einander entsprechender Form aufweisen, die durch innere Umfangswände (1', 5') und Vorsprünge (1", 5") gebildet sind, wobei die parallelen Ränder, welche die offene Aufnahme (3) des Basisteils (1) begrenzen, die Form von Rippen haben, die mit den korrespondierenden parallelen Längsrillen von den Rändern des Schließelements (7) der offenen Aufnahme (3) zusammenwirken.

3. Schelle nach einem der Ansprüche 1 und 2, **dadurch gekennzeichnet, dass** das Basisteil (1) und das Komplementärteil (5) mittels Schraubbolzen (6) miteinander verbunden sind, die sie auf Höhe ihrer Verbindungsebenen durchstoßen, wobei der Kopf (6') und die Mutter (6'') jedes Schraubbolzens in den Vertiefung der Teile (1) und (5) mit der entsprechenden Form zu liegen kommen.

4. Schelle nach einem der Ansprüche 1 und 2, **dadurch gekennzeichnet, dass** das Schließelement (7) der offenen Aufnahme (3) für die Aufnahme des Endstücks eines Rohrelements (4) und zum Festklemmen des Endstücks in der offenen Aufnahme (3) an dem Basisteil (1) mittels eines Schraubbolzens (8) befestigt ist, der das Schließelement (7) und das Basisteil (1) auf Höhe der offenen Aufnahme (3) sowie eine entsprechende Bohrung (4') des Rohrelements (4) durchstößt, wobei der Schraubenkopf und die Mutter dieses Bolzens (8) mit Vertiefungen entsprechender Form im Körper der offenen Aufnahme (3) des Basisteils (1) und im Schließelement (7) zusammenwirken.

5. Schelle nach Anspruch 1, **dadurch gekennzeichnet, dass** das Basisteil (1) mit zwei offenen Aufnahmen (3) für die Aufnahme des Endstücks eines Rohrelements (4), das sich in einer zur Achse des Haltepfostens (2) senkrechten Ebene erstreckt, versehen ist, wobei wenigstens eine dieser offenen Aufnahmen (3) sich unter einem Winkel in Bezug auf die Stoßflächen des Basisteils (1) erstreckt, wobei jede offene Aufnahme (3) mit einem Schließelement (7) ausgestattet ist.

6. Schelle nach Anspruch 1, **dadurch gekennzeichnet, dass** sie ein Komplementärteil (5') umfasst, das mit dem Basisteil (1) identisch ist.

7. Schelle nach Anspruch 1, **dadurch gekennzeichnet, dass** sie ein Komplementärteil (5"') umfasst, das mit zwei offenen Aufnahmen (3) für die Aufnahme des Endstücks von Rohrelementen (4) versehen ist, die sich in einer zur Achse des Haltepfostens (2) senkrechten Ebene erstrecken, wobei mindestens eine dieser offenen Aufnahmen (3) sich unter einem Winkel in Bezug auf die Stoßflächen des Basisteils (1) erstreckt und wobei jede offene Aufnahme (3) mit einem Schließelement (7) ausgestattet ist.
